## Europäisches Patentamt
## European Patent Office
## Office européen des brevets

(19)

(11) Veröffentlichungsnummer: **0 017 764**
**B1**

(12) **EUROPÄISCHE PATENTSCHRIFT**

(45) Veröffentlichungstag der Patentschrift: **29.06.83**

(51) Int. Cl.³: **H 04 Q 3/00, H 04 M 19/02**

(21) Anmeldenummer: **80101330.1**

(22) Anmeldetag: **13.03.80**

(54) Teilnehmeranschlussschaltung mit Erdtastenbetätigungsindikation, hochohmig schaltbarer Speisung und Vorrichtung zur Rufsignalerzeugung.

(30) Priorität: **23.03.79 DE 2911584**

(43) Veröffentlichungstag der Anmeldung:
**29.10.80 Patentblatt 80/22**

(45) Bekanntmachung des Hinweises auf die Patenterteilung:
**29.06.83 Patentblatt 83/26**

(84) Benannte Vertragsstaaten:
**AT CH DE FR GB IT NL SE**

(56) Entgegenhaltungen:
**EP - A - 0 017 763**
**DE - A - 2 520 450**
**FR - A - 2 329 126**
**US - A - 3 121 775**
**US - A - 3 882 282**

(73) Patentinhaber: **SIEMENS AKTIENGESELLSCHAFT**
**Berlin und München Wittelsbacherplatz 2**
**D-8000 München 2 (DE)**

(72) Erfinder: **Lechner, Robert, Dipl.-Ing.**
**Haidfeldstrasse 5**
**D-8156 Otterfing (DE)**

Courier Press, Leamington Spa, England.

Teilnehmeranschlußschaltung mit Erdtastenbetätigungsindikation, hochohmig schaltbarer Speisung
und Vorrichtung zur Rufsignalerzeugung

Die Erfindung betrifft eine Teilnehmeranschlußschaltung mit einer Speisebrücke in Form eines in die an Erdpotential liegende Ader der Teilnehmeranschlußleitung eingefügten ersten Widerstandes, eines an die an Speisepotential liegende Ader der Teilnehmeranschlußleitung eingefügten zweiten Widerstandes, sowie eines die beiden Adern an den der Speisestromquelle abgewendeten Anschlüssen der beiden Widerstände überbrückenden Kondensators, wobei mindestens einem der Speisewiderstände ein durch einen hochohmigen Widerstand überbrückter Abschaltekontakt in Reihe geschaltet ist, und wobei diese Speisebrücke an der Kondensatorseite mit einem Gabelübertrager für den Zweidraht-/Vierdrahtübergang zusammengeschaltet ist, ferner mit einer Auswerteschaltung, die zur Anzeige von zumindest bei längerem Andauern unzulässig hohen über wenigstens einen Teil des Speisestromkreises fließenden Strömen dient.

Bei einer bekannten Teilnehmeranschlußschaltung dieser Art (US—A—3 121 775) wird die Auswerteschaltung dazu ausgenützt, das Fließen von Leckströmen zwischen den Adern der Teilnehmeranschlußleitung, die einen zugelassenen Grenzwert übersteigen, anzuzeigen.

Es ist auch schon vorgeschlagen worden (europäische Patentanmeldung 80101329) die hochohmigen Widerstände so zu dimensionieren, daß die Auswerteschaltung bei geschlossenen Abschaltekontakten auf Erdtastenbetätigungen in der an die Teilnehmeranschlußleitung angeschlossenen Teilnehmerstation anspricht und bei geöffneten Abschaltekontakten der bei Erdtastenbetätigung fließende Strom so begrenzt wird, daß im betroffenen Teil des Speisestromkreises liegende Schaltelemente nicht beschädigt werden, und eine derartige Steuerung der Abschaltekontakte vorzusehen, daß sie, sofern die Erdtastenbetätigung eine vorgegebene Zeitspanne übersteigt, geöffnet und nach Beendigung der Erdtastenbetätigung wieder geschlossen werden.

Hiermit ist es möglich ohne großen Mehraufwand die im Speisestromkreis liegenden Schaltelemente auch gegen Überlastungen zu schützen, die durch überlange Erdtastenbetätigung zu Stande kommen.

Bei der Anschaltung einer Einrichtung zur Rufsignalerzeugung wird eine Gleichspannung an die Teilnehmeranschlußleitung angeschaltet, die entsprechend dem Signal-/Pausenverhältnis des jeweiligen Rufs von einer Wechselspannung der Ruftonfrequenz überlagert wird. Damit der aufgrund der erwähnten Gleichspannung fließende Strom nicht durch den Speisestrom teilweise oder völlig kompensiert wird, erfolgt gleichzeitig mit den Anlegen der Gleichspannung bei Anschalten der Einrichtung zur Rufsignalerzeugung, eine Abtrennung der Speisestromquelle. Es ist daher für die Einrichtung zur Rufsignalerzeugung ein Umschalter erforderlich.

Aufgabe der vorliegenden Erfindung ist es nun, unter den gegebenen Umständen, also bei einer Teilnehmeranschlußleitung, die aus den erwähnten Gründen einen hochohmigen überbrückten Abschaltewiderstand für den Speisestrom aufweist, die Anschaltung der Einrichtung zur Rugsignalerzeugung demgegenüber zu vereinfachen.

Erfindungsgemäß geschieht dies dadurch, daß der Abschaltekontakt für den Speisestrom jeweils zwischen dem der Speisestromquelle abgewendeten Anschluß des Speisebrückenwiderstandes und dem betreffenden Anschlußpunkt der Speisebrücke an den Gabelübertrager liegt, an dem auch ein Eingang der Auswerteschaltung angeschlossen ist, daß die Einrichtung zur Rufstromerzeugung über einen Anschaltekontakt und einen Vorwiderstand an einen der Anschlußpunkte der Auswerteschaltung anschaltbar ist, und daß der betroffene Abschaltekontakt für den Speisestrom und der Anschaltekontakt der Einrichtung zur Rufstromerzeugung derart gesteuert sind, daß sie nur alternativ geschlossen werden können.

Durch die erfindungsgemäße Maßnahme ist es möglich, einen sowieso schon vorhandenen Abschaltekontakt für den Speisestrom im Zusammenhang mit der Anschaltung der Einrichtung zur Rufsignalerzeugung zum Hochohmigschalten des Speisestromkreises auszunutzen, so daß nicht wie im erläuterten Fall die Einrichtung zur Rufsignalerzeugung einen Umschaltekontakt aufzuweisen hat, sondern ein einfacher Anschaltekontakt genügt. Die in diesem Falle vorgesehene Lage des Abschaltekontaktes, nämlich zwischen dem der Speisestromquelle abgewendeten Anschluß des Speisebrückenwiderstandes und dem Anschaltepunkt der Auswerteschaltung stellt sicher, daß der beim Anschalten der Einrichtung zur Rufsignalerzeugung fließende Strom nicht nur von einen Speisestrom weitgehend unbeeinflußt bleibt, sondern auch verhindert ist, daß er über den Kondensator der Speisebrücke abfließt.

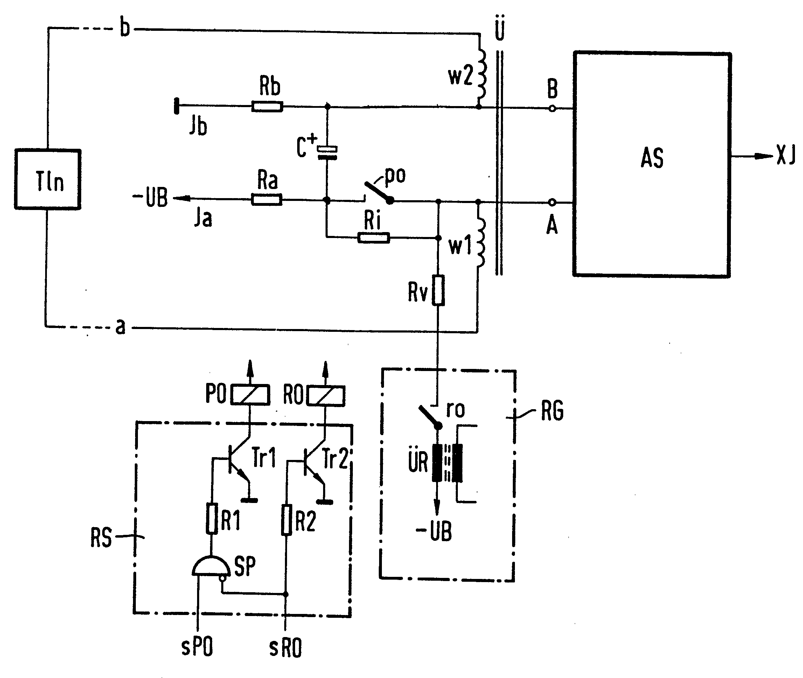

Nachstehend wird die Erfindung anhand eines Ausführungsbeispiels unter Bezugnahme auf die Zeichnung näher erläutert.

Die Figur zeigt im zum Verständnis der Erfindung erforderlichen Umfang eine Teilnehmeranschlußschaltung. Bestandteil dieser Teilnehmeranschlußschaltung ist eine Speisebrücke, die aus einem ersten Widerstand Ra, der in die an Speisepotential -UB liegende Ader, die a-Ader, der Teilnehmeranschlußleitung eingefügt ist, aus einem zweiten Widerstand Rb, der in die an Erdpotential liegende Ader, die b-Ader, der Teilnehmeranschlußleitung eingefügt ist, sowie aus einem Kondensator C besteht, der an den der Speisestromquelle abgewendeten Anschlüssen der beiden Widerstände Ra und Rb die beiden Leitungsadern der Teilnehmeranschlußleiting überbrückt.

Die Speisebrücke ist an der Kondensatorseite an in die a-Ader bzw. die b-Ader eingefügte Wicklungen w1 bzw. w2 eines Gabelübertragers Ü asngeschlossen, dessen die Vierdrahtseite bildende Übertragerwicklung hier nicht dargestellt ist.

Die dargestellte Teilnehmeranschlußschaltung weist außerdem eine Auswerteschaltung weist außerdem eine Auswerteschaltung AS auf, deren Eingänge A und B an den erwähnten Anschlußpunkten der Speisebrücke an den Wicklungen w1 und w2 des Übertragers Ü liegen. Die Auswerteschaltung dient, wie erwähnt, dazu, das Vorliegen einer Erdtastenbetätigung anzuzeigen bzw. im Falle einer Isolationsprüfung ein Signal abzugeben, wenn der zwischen den Leitungsadern der Teilnehmeranschlußleitung fließende einen vorgegebenen Grenzwert überschreitet.

Beim dargestellten Ausführungsbeispiel ist nur ein Abschaltekontakt po vorhanden, der in die a-Ader der Teilnehmerleitung zwischen dem Widerstand Ra und zwischen der Wicklung w1 eingefügt ist. Er est durch einen hochohmigen Widerstand Ri überbrückt. Im Gesprächszustand dient dieser Abschaltekontakt dazu, dann, wenn die durch die Auswerteschaltung AS gemeldete Erdtastenbetätigung eine vorgegebene Zeitspanne übersteigt, den Speisestromkreis hochohmig zu schalten. Der hochohmige Widerstand Ri hat im Zusammenhang mit der Isolationsprüfung die vorstehend erläuterte Funktion.

Diese dargestellte Schaltungsanordnung ist außerdem mit einer Einrichtung RG zur Rufsignalerzeugung versehen, von der lediglich ein Übertrager ÜR gezeigt ist, dessen Sekundärwicklung einerseits am Potential -UB liegt, andererseits mittels eines Anschaltekontaktes ro über einen Widerstand RV an die a-Ader der Teilnehmeranschlußleitung gelegt werden kann, und zwar an derselben Stelle, an der auch der Anschaltekontakt po mit der Wicklung w1 des Übertragers Ü verbunden ist. Der Primärwicklung des Überstragers ÜR der Einrichtung RG wird in hier nicht dargestellter Weise eine Wechselspannung mit der Ruftonfrequenz zugeführt.

Die dargestellte Schaltungsanordnung weist für die Steuerung des erwähnten Anschal tekontaktes ro im Rufgenerator RG und des Abschaltekontaktes po eine Relaissteuerung RS für die Relais PO und RO auf, zu denen die erwähnten beiden Kontakte gehören. Die Relaissteuerung RS ist so ausgelegt, daß die beiden Kontakte po und ro immer nur alternativ geschlossen sein können. Beim dargestellten Ausführungsbeispiel weist sie ein Sperrglied SP auf, dessen Normaleingang ein Steuersignal sPO zugeführt wird, das gesendet wird, um den Kontakt po zu betätigen und dessen Sperreingang ein Signal sRo zugeführt wird, das zur Betätigung des Kontaktes ro führt. Der Ausgang des Sperrgliedes SP ist über einen Widerstand R1 an die Basis eines ersten Transistors Tr1 gelegt, in dessen Kollektorleitung die Wicklung des Relais PO liegt. Der Signaleingang für das Signal sRO führt auch über einen Widerstand R2 an die Basis eines zweiten Transistors Tr2, in dessen Kollektorleitung die Wicklung des anderen Relais RO liegt.

Der Kontakt po ist normalerweise bei über den Hakenumschalter des an die Teilnehmeranschlußleitung angeschlossenen Teilnehmers T1n geschlossenem Speisestromkreis geschlossen und öffnet in diesem Zustand nur dann, wenn eine Teilnehmer längere Zeit eine Erdtastenbetätigung vornimmt oder, wenn entsprechend der oben genannten vorgeschlagenen Lösung, eine Isolationsprüfung vorgenommen werden soll. Wenn nun jedoch eine Anschaltung der Einrichtung RG zur Rufsignalerzeugung erfolgen soll, an der Relaissteuerung RS also das Signal sRO anliegt, dann ist die Verknüpfungsbedingung des Sperrgliedes Sp nicht mehr erfüllt und der Transistor Tr1 wird gesperrt, mit der Folge, daß die Relaiswicklung PO stromlos wird und der Kontakt po abfällt. Gleichzeitig zieht über die Hauptstromstrecke des Transistors Tr2 das Relais RO an und schließt den Kontakt ro, womit nunmehr über den Widerstand RV die dauernd oder zeitweise je nach Art des Rufs v on einer Wechselspannung überlagerte Gleichspannung -UB an der a-Ader liegt und den Wecker des Teilnehmers T1n beeinflussen kann. Wegen des geöffneten Abschaltekontaktes po wird der dabei fließende Rufstrom weder durch den über die Speisebrücke gelieferten Speisestrom wesentlichen beeinträchtigt, noch kann er über den Kondensator C der Speisebrücke abfließen, da der dem Abschaltekontakt po parallel liegende Widerstand Ri hochohmig genug ist. Nach Beendigung der Rufphase, wenn das Signal sRO wegfällt, kann das Signal sPO über das Sperrglied SP wieder auf die Baisis des Transistors Tr1 durchgreifen, so daß das Relais PO wieder anzieht und der Kontakt po wieder geschlossen wird. Im Zusammenhang mit der Rufstromanschaltung ergänzt der Abschaltekontakt po aufgrund der antsprechenden Beeinflussung durch die Relaissteuerung RS den Anschaltekontakt ro der Einrichtung RG zur Rugsignalerzeugung, also zu einem Umschaltekontakt.

**Patentanspruch**

Teilnehmeranschlußschaltung mit einer Speisebrücke in Form eines in die an Erdpotential liegende Ader (b) der Teilnehmeranschlußleitung eingefügten ersten Widerstandes (Rb), eines an die an Speisepotential (-UB) liegende Ader (a) der Teilnehmeranschlußleitung eingefügten zweiten Widerstandes (Ra), sowie eines die beiden Adern an den der Speisestromquelle abgewendeten Anschlüssen der beiden Widerstände überbrückenden Kondensators (C), wobei mindestens einem der Speisewiderstände ein durch einen hochohmigen Widerstand (Ri) überbrückter Abschaltekontakt (po) in Reihe geschaltet ist, und wobei diese Speisebrücke an der Kondensatorseite mit einem Gabelübertrager (Ü) für den Zweidraht-/Vierdrahtübergang zusammengeschaltet ist, ferner mit einer Auswerteschaltung (AS), die zur Anzeige von zumindest bei längerem Andauern unzulässig hohen, über wenigstens einen Teil des Speisestromkreises fließenden Strömen dient, sowie mit einer Einrichtung zur Rufsignalzeugung (RG), dadurch gekennzeichnet, daß der Abschaltekontakt (po) für den Speisestrom jeweils zwischen dem der Speisestromquelle abgewendeten Anschluß des Speisebrückenwiderstandes (Ra, Rb) und dem betreffenden Anschlußpunkt der Speisebrücke an den Gabelübertrager (Ü) liegt, an dem auch der Eingang (A) der Auswerteschaltung (AS) angeschlossen ist, daß die Einrichtung zur Rufstromerzeugung (RG) über einen Anschaltekontakt (ro) und einen Vorwiderstand (RV) an eine der Anschlußpunkte der Auswerteschaltung (AS) anschaltbar ist, und daß der betroffene Abschaltekontakt (po) für den Speisestrom und der Anschaltekontakt (ro) der Einrichtung zur Rufstromerzeugung (RG) derart gesteuert sind, daß sie nur alternative geschlossen werden können.

**Revendication**

Circuit de raccordement d'abonné comportant un pont d'alimentation sous la forme d'une première résistance (Rb) insérée dans le fil (*b*) de la ligne de raccordement d'abonné qui se trouve au potentiel de la terre, d'une seconde résistance (Ra) insérée dans le fil (*a*) de la ligne de raccordement d'abonné qui se trouve au potentiel d'alimentation (-UB), ainsi que d'un condensateur (C) relient les deux fils au niveau des bornes des deux résistances qui sont opposées à la source de courant d'alimentation, un contact de coupure (po), shunté par une résistance (Ri) de forte valeur ohmique, étant monté en série avec au moins une des résistances d'alimentation, et ce pont d'alimentation étant réuni, du côté du condensateur, avec un transformateur différentiel (Ü) pour le passage deux fils/quatre fils, et comportant en outre un circuit d'évaluation (AS) qui sert à afficher des courants inadmissiblement élevés pour une durée trop longue qui circulent par l'intermédiaire d'au moins une partie du circuit de courant d'alimentation, ainsi qu'un dispositif (RG) de production du signal d'appel, caractérisé par le fait que le contact de coupure (po) pour le courant d'alimentation se trouve respectivement entre la borne de la résistance du pont d'alimentation (Ra, Rb) qui est opposée à la source de courant d'alimentation et le point de raccordement concerné du pont d'alimentation au transformateur différentiel (Ü) auquel est raccordée également l'entrée (A) du circuit d'évaluation (AS), que le dispositif (RG) de production du courant d'appel peut être relié, par l'intermédiaire d'un contact de mise en circuit (ro) et d'une résistance d'entrée (RV), à un des points de raccordement du circuit d'évaluation (AS), et que le contact de coupure concerné (po) pour le courant d'alimentation et le contact de mise en circuit (ro) du dispositif (RG) de production du courant d'appel sont commandés de manière à ne pouvoir être fermés qu'alternativement.

**Claim**

A subscriber connection circuit with a supply bridge in the form of a first resistor (Rb) inserted into the wire (b) of a subscriber connection line, which is connected to earth potential, and of a second resitor (Ra) inserted into the wire (a) of the subscriber connection line, which is connected to the supply potential (-UB), and of a capacitor (C) which bridges the two wires at the connections of the two resistors which face away from the supply circuit, where at least one of the supply resistors is connected in series to a disconnecting contact (po) which is bridged by a high-value resistor (Ri), and where on the capacitor side the supply bridge is connected to a hybrid transformer (Ü) for the two-wire-/four-wire junction, and further with an analysis circuit (AS) which serves to indicate currents which are inadmissibly high and persistent and flow across at least a part of the supply circuit, and with a device serving for the ringing signal generation (RG), characterised in that the disconnecting contact (po) for the supply current is arranged between the connection of the supply bridge resistor (Ra, Rb) remote from the supply current source and the particular connection point of the supply bridge at the hybrid transformer (Ü) to which the input (A) of the analysis circuit (AS) is connected, that the device for ringing current production (RG) can be connected via a connecting contact (ro) and a series resistor (RV) to one of the connection points of the analysis circuit (AS), and that the respective disconnecting contact (po) for the supply current and the connecting contact (ro) of the device for the ringing current production (RG) are so controlled that they can only be closed alternatively.